# EUROPÄISCHE PATENTSCHRIFT

(11) **EP 3 337 032 B1**
(45) Veröffentlichungstag und Bekanntmachung des Hinweises auf die Patenterteilung: **30.06.2021**
(21) Anmeldenummer: 17201516.6
(22) Anmeldetag: 14.11.2017
(51) Int. Cl.: H02P 25/092

(54) **VERFAHREN ZUM BETRIEB EINES RELUKTANZMOTORS**
METHOD FOR OPERATING A RELUCTANCE MOTOR
PROCÉDÉ DE FONCTIONNEMENT D'UN MOTEUR À RÉLUCTANCE

(30) Priorität: 19.12.2016 DE 102016124751
(43) Veröffentlichungstag der Anmeldung: 20.06.2018
(73) Patentinhaber: Miele & Cie. KG, 33332 Gütersloh (DE)
(72) Erfinder: Neufeld, Alexander, 33619 Bielefeld (DE); Balzer, Eugen, 33729 Bielefeld (DE)

(56) Entgegenhaltungen:
- EP-B1- 0 780 966
- EP-B1- 1 716 632
- DE-A1-102014 215 479
- DE-A1-102016 102 329
- US-B1- 6 246 193

## Beschreibung

Die Erfindung betrifft zwei Verfahren zum Betrieb eines Reluktanzmotors gemäß der Patentansprüche 1 und 4, zwei Ansteuerungsschaltungen gemäß der Patentansprüche 8 und 9 zum Ausführen jeweils eines der beiden Verfahren. Ausgestaltungen der Erfindung betreffen einen Reluktanzmotor gemäß dem Patentanspruch 10 mit einer derartigen Ansteuerungsschaltung sowie ein elektrisches Gerät gemäß dem Patentanspruch 11 mit einem derartigen Reluktanzmotor.

Auf dem Gebiet der elektrischen Antriebe sind die Reluktanzmotoren (engl.: switched reluctance motor - SRM) bekannt, bei denen das Drehmoment im Rotor ausschließlich durch die Reluktanzkraft erzeugt wird. Daher müssen weder Stator noch Rotor eines Reluktanzmotors mit Permanentmagneten bestückt werden noch befinden sich am Rotor elektrische Wicklungen. Stattdessen besitzt der Rotor ausgeprägte Pole und besteht üblicherweise aus einem hochpermeablen, weichmagnetischen Material wie beispielsweise einem Elektroblech. Hierdurch können Reluktanzmotoren vergleichsweise günstig und einfach hergestellt werden. Auch entfallen prinzipbedingt jede Art von verschleißanfälligen Schleifringen und Bürsten, was Reluktanzmotoren eine vergleichsweise hohe Robustheit beschert.

Da der Läufer keine Wicklung trägt, fallen keine Stromwärmeverluste (Joulsche Verluste) an, wie das bei den bisher eingesetzten Asynchronmotoren prinzipiell der Fall ist. Dadurch kann der Wirkungsgrad des Synchron-Reluktanzmotors gegenüber dem Asynchronmotor gleicher Leistung ansteigen, was zu einer höheren Effizienz des Motors führt. Die fehlende Wärmeentwicklung im Läufer hat auch noch den Vorteil, dass sowohl die Lager als auch die Ständerwicklung kälter bleiben. Das erhöht die Lebensdauer der Lager und der Wicklungsisolation und reduziert Ausfallzeiten. Der Synchron-Reluktanzmotor hat auch im Teillastbereich sehr gute Wirkungsgrade.

Reluktanzmotoren werden üblicherweise mehrphasig bzw. mehrsträngig ausgeführt und besitzen eine unterschiedliche Anzahl ausgeprägter Zähne an Rotor und Stator. Die Statorzähne sind mit Spulen bewickelt, die abwechselnd ein- und ausgeschaltet bzw. mit pulsweitenmodulierten Spannungspulsen (PWM-Spannungspulsen) bestromt werden. Die Zähne mit den bestromten Wicklungen ziehen jeweils die nächstgelegenen Zähne des Rotors wie einen Elektromagneten an und werden abgeschaltet bzw. nicht bestromt, wenn oder kurz bevor die Zähne des Rotors den sie anziehenden Statorzähnen gegenüberstehen. In dieser Position wird die nächste Phase auf den in der Drehrichtung nächsten Statorzähnen eingeschaltet, so dass die Rotorzähne von den in der Drehrichtung nächsten Statorzähnen angezogen werden.

Um die Wicklungen der einzelnen Stränge zum richtigen Zeitpunkt umzuschalten bzw. zu bestromen, wird üblicherweise ein Rotorlagegeber (Rotorlagesensor) vorgesehen, um die Lage des Rotors relativ vom Stator bestimmen zu können. Dies verursacht jedoch Aufwand und Kosten. Weiterhin kann der Lagesensor leicht verschmutzen, was Störungen oder sogar einen Totalausfall des Motors verursachen kann. Gerade bei der Verwendung in potenziell schmutzbelasteten Umgebungen, wie etwa als Gebläsemotor in einem Staubsauger, kann der Lagesensor leicht verschmutzen und dann zum Ausfall des Motors führen.

Daher ist eine sensorlose Ansteuerung bekannt, bei der für alle Phasen bzw. für alle Stränge der jeweilige Ist-Strom gemessen und hieraus der zeitliche Verlauf des jeweiligen Phasenstroms bestimmt wird. Das Maximum des zeitlichen Verlaufs stellt eine Winkelinformation des Rotors dar, welche zur sensorlosen Steuerung eines Reluktanzmotors verwendet werden kann.

Nachteilig ist hierbei, dass der zeitliche Verlauf des Phasenstroms kein klares Maximum aufweisen, sondern das Maximum einen flachen und breiten Berg darstellen kann. Auf diese Weise kann es schwierig sein, das Maximum zeitlich genau zu ermitteln. Dies kann zu einer ungenauen Winkelinformation in Bezug auf den Rotor führen.

Nachteilig ist ferner, dass die Bestimmung des zeitlichen Verlaufs des Phasenstroms mittels Abtastung erfolgt. Somit hängen die Genauigkeit des zeitlichen Verlaufs des Phasenstroms und damit die Genauigkeit der Winkelinformation auch von der Abtastrate ab. Mit anderen Worten muss der zeitliche Verlauf des Phasenstroms mit einer hohen Abtastrate bestimmt werden, um eine möglichst genaue Winkelinformation erhalten zu können. Dies erfordert jedoch eine hohe Rechenleistung der Steuerung des Reluktanzmotors, um den Phasenstrom möglichst häufig abzutasten, hieraus den zeitlichen Verlauf zu erzeugen und dessen Maximum zu bestimmen. Dies kann zu einem erheblichen Aufwand der Steuerung mit entsprechenden Kosten führen.

Nachteilig ist des Weiteren, dass die Messung des Phasenstroms üblicherweise über einen Messwiderstand in Form eines Shunts erfolgt, wobei für jeden Strang ein Shunt vorhanden ist. Üblicherweise benötigt jeder Shunt eine Verstärkerschaltung. Somit kann alleine für die Messung des Phasenstroms bereits ein nicht unerheblicher Aufwand erforderlich sein.

Daher kann für eine derartige sensorlose Ansteuerung eines Reluktanzmotors zwar auf den Aufwand und die Kosten eines Rotorlagegebers verzichtet werden, dies kann jedoch für jeden Strang einen Messwiderstand und üblicherweise eine Verstärkerschaltung erfordern. Ferner kann für die Abtastung des Phasenstroms und für die Erstellung des zeitlichen Verlaufs des Phasenstroms sowie für die Bestimmung des Maximums ein erheblicher zusätzlicher Rechenaufwand mit entsprechend vergleichsweise teurer Steuerung erforderlich sein. Trotz dieses Aufwands kann dieses sensorlose Verfahren dennoch zu einer ungenauen Bestimmung des Maximums des Phasenstroms führen, so dass eine auf dieser Winkelinformation beruhende Steuerung zu schlechteren Ergebnisses führen kann als bei der Verwendung eines Rotorlagegebers.

Das Dokument EP 17 166 32 B1 offenbart die Bestimmung der Rotorlage mittels einer Analyse der Zwischenkreisspannung.

Das Dokument EP 0 780 966 B1 offenbart die Rotorlage, basierend auf dem Strom, zu ermitteln. Z

Der Erfindung stellt sich somit das Problem, ein Verfahren zum Betrieb eines Reluktanzmotors bereitzustellen, so dass auf einen Rotorlagegeber verzichtet und dennoch eine genauere Winkelinformation über den Rotor als bisher bekannt erhalten werden kann. Zumindest soll ein alternatives Verfahren bereitgestellt werden.

Erfindungsgemäß wird dieses Problem durch ein Verfahren mit den Merkmalen des Patentanspruchs 1, durch ein Verfahren mit den Merkmalen des Patentanspruchs 4, durch eine Ansteuerungsschaltung mit den Merkmalen des Patentanspruchs 8, durch eine Ansteuerungsschaltung mit den Merkmalen des Patentanspruchs 9 gelöst. Vorteilhafte Ausgestaltungen und Weiterbildungen der Erfindung ergeben sich aus den nachfolgenden Unteransprüchen. Somit betrifft die vorliegende Erfindung ein Verfahren zum Betrieb eines Reluktanzmotors mit den Schritten:
- Bestromen der Wicklung einer Phase des Reluktanzmotors für eine vorbestimmte Zeitdauer ab einem Startzeitpunkt,
- Erfassen einer Zwischenkreisspannung einer Ansteuerungsschaltung des Reluktanzmotors für zumindest einen Abschnitt der vorbestimmten Zeitdauer,
- Erstellen eines zeitlichen Verlaufs der erfassten Zwischenkreisspannung für zumindest einen Abschnitt der erfassten Zeitdauer,
- Ermitteln eines Wertes eines Anstiegs der erfassten Zwischenkreisspannung aus dem erstellten zeitlichen Verlauf,
- Vergleichen des Wertes des Anstiegs der erfassten Zwischenkreisspannung mit einem vorbestimmten Wert eines Anstiegs, und
- in dem Fall, dass der ermittelte Wert des Anstiegs größer als oder gleich wie der vorbestimmte Wert eines Anstiegs ist, Beibehalten des Startzeitpunktes des Bestromens für das nächste Bestromen der Phase, und
- in dem Fall, dass der ermittelte Wert des Anstiegs kleiner als der vorbestimmte Wert eines Anstiegs ist, zeitliches Verzögern des Startzeitpunktes des Bestromens für das nächste Bestromen der Phase.

Der vorliegenden Erfindung liegt dabei die Erkenntnis zugrunde, dass falls die Zwischenkreisspannung der Ansteuerungsschaltung eines Reluktanzmotors innerhalb einer vorbestimmten Zeitdauer nach dem Startzeitpunkt des Bestromens der jeweiligen Phase in einem bestimmten Maße ansteigend ist, hieraus geschlossen werden kann, dass der Startzeitpunkt des Bestromens der Phase richtig oder sogar ideal gewählt ist. Dann kann der Startzeitpunkt des Bestromens der Phase für das nächste Bestromen derselben Phase beibehalten werden. Falls die Zwischenkreisspannung jedoch innerhalb der vorbestimmten Zeitdauer nach dem Startzeitpunkt des Bestromens der jeweiligen Phase nicht in einem bestimmten Maße ansteigend ist, kann hieraus geschlossen werden, dass der Startzeitpunkt des Bestromens der Phase zu früh gewählt ist. Dann kann der Startzeitpunkt des Bestromens der Phase für das nächste Bestromen derselben Phase zeitlich nach hinten verschoben werden. Dies gilt auch, falls die Zwischenkreisspannung abfällt, d.h. eine negative Steigung aufweist.

Die vorbestimmte Zeitdauer ergibt sich üblicherweise aus dem allgemeinen Betrieb des Reluktanzmotors, da durch dieses Bestromen die Drehbewegung des Rotors erzeugt werden kann. Dabei muss die Zwischenkreisspannung jedoch nicht über diese gesamte Zeitdauer des Bestromens erfasst werden, da zur Durchführung des erfindungsgemäßen Verfahrens im Wesentlichen der anfängliche Abschnitt der Zeitdauer des Bestromens relevant sein kann. Dies kann den Aufwand des Erfassens der Zwischenkreisspannung reduzieren. Dies gilt entsprechend für das Erstellen eines zeitlichen Verlaufs der erfassten Zwischenkreisspannung.

Der vorbestimmte Wert des Anstiegs der Zwischenkreisspannung kann derart gewählt werden, wie es dem Wert des Anstiegs der Zwischenkreisspannung bei einem idealen Startzeitpunkt des Bestromens der Phase entspricht. Der Wert des Anstiegs der Zwischenkreisspannung kann jedoch auch derart gewählt werden, wie es dem Wert des Anstiegs der Zwischenkreisspannung bei einem gerade noch ausreichenden Startzeitpunkt des Bestromens der Phase entspricht, ohne dass es zu Bremsmomenten am Rotor kommen kann.

Gemäß einer Ausgestaltung der vorliegenden Erfindung wird die Zwischenkreisspannung ab dem Startzeitpunkt des Bestromens erfasst. Hierdurch kann der Wert des Anstiegs möglichst frühzeitig bestimmt werden, um diese Information für die nachfolgende Bestromung rechtzeitig zur Verfügung stellen zu können. Hierfür kann in diesem Fall ggfs. eine Steuerungseinheit wie z.B. ein Mikrocontroller einer Ansteuerungsschaltung mit einer geringeren Rechenleistung verwendet werden, um dessen Kosten zu reduzieren. Ferner kann gerade der Anstieg der Zwischenkreisspannung direkt zu Beginn des Bestromens besonders aussagekräftig für das erfindungsgemäße Verfahren sein.

Gemäß einer weiteren Ausgestaltung der vorliegenden Erfindung wird die Zwischenkreisspannung über etwa die halbe vorbestimmte Zeitdauer des Bestromens erfasst. Auf diese Weise kann der Anstieg der Zwischenkreisspannung zu Beginn des Bestromens betrachtet werden. Gleichzeitig kann der Aufwand des Erfassens und Auswertens der Messdaten auf möglichst wenige Daten reduziert werden, welche jedoch für die relevante Information aussagekräftig sein können.

Die vorliegende Erfindung betrifft auch ein Verfahren zum Betrieb eines Reluktanzmotors mit den Schritten:
- Bestromen der Wicklung einer Phase des Reluktanzmotors für eine vorbestimmte Zeitdauer ab einem Startzeitpunkt,
- Erfassen eines Phasenstroms einer Ansteuerungsschaltung des Reluktanzmotors für zumindest einen Abschnitt der vorbestimmten Zeitdauer,
- Erstellen eines zeitlichen Verlaufs des erfassten Phasenstroms I1, I2 für zumindest einen Abschnitt der erfassten Zeitdauer,
- Ermitteln eines Gradienten des erfassten Phasenstroms, vorzugsweise aus einem erstellten zeitlichen Verlauf des erfassten Phasenstroms,
- Ermitteln eines maximalen Wertes des Gradienten des erfassten Phasenstroms, und
- Vergleichen des maximalen Wertes des ermittelten Gradienten mit einem vorgegebenen Schwellenwert, bevorzugt Null, und
- in dem Fall, dass der maximale Wert des Gradienten des Phasenstroms kleiner als der vorgegebene Schwellenwert ist, Beibehalten des Endzeitpunktes des Bestromens für das nächste Bestromen der Phase, und
- in dem Fall, dass der Wert des Gradienten des Phasenstroms gleich dem oder größer als der vorgegebene Schwellenwert ist, zeitliches Vorziehen des Endzeitpunktes des Bestromens für das nächste Bestromen der Phase.

Der vorliegenden Erfindung liegt dabei die weitere Erkenntnis zugrunde, dass, falls der Phasenstrom zum Endzeitpunkt des Bestromens abfällt, hieraus geschlossen werden kann, dass der Endzeitpunkt des Bestromens der Phase richtig oder sogar ideal gewählt ist. Dann kann der Endzeitpunkt des Bestromens der Phase für das nächste Bestromen derselben Phase beibehalten werden.

Falls der Phasenstrom zum Endzeitpunkt des Bestromens jedoch stattdessen wieder ansteigt, d.h. sich im Stromverlauf ein lokales Maximum in Form eines Zacken ausbildet, kann hieraus geschlossen werden, dass der Endzeitpunkt des Bestromens der Phase zu spät gewählt ist. Dann kann der Endzeitpunkt des Bestromens der Phase für das nächste Bestromen derselben Phase zeitlich nach vorne verschoben werden.

Gemäß einer Ausgestaltung der vorliegenden Erfindung wird der Phasenstrom ab dem Startzeitpunkt des Bestromens erfasst. Hierdurch kann sichergestellt werden, dass das Maximum des Phasenstroms erfasst werden kann.

Gemäß einer weiteren Ausgestaltung der vorliegenden Erfindung wird der Phasenstrom über etwa die halbe vorbestimmte Zeitdauer des Bestromens und zu dem Endzeitpunkt der vorbestimmten Zeitdauer erfasst. Auf diese Weise kann der Aufwand des Erfassens des Phasenstroms reduziert und gleichzeitig die beiden relevanten Zeitpunkte dennoch abgedeckt werden. Dabei liegt diesem Aspekt der vorliegenden Erfindung die Erkenntnis zugrunde, dass das Maximum des Phasenstroms üblicherweise in der ersten Hälfte der Zeitdauer des Bestromens auftritt und somit erfasst werden kann, auch wenn lediglich dieser Zeitraum betrachtet wird. Ferner wird zusätzlich ein einzelner Wert des Phasenstroms zum Endzeitpunkt des Bestromens erfasst, so dass die beiden relevanten Werte des Phasenstroms erfasst werden können.

Gemäß einer weiteren Ausgestaltung der vorliegenden Erfindung weist das Verfahren ferner nach dem Schritt des Erfassens des Phasenstroms und vor dem Schritt des Ermittelns eines maximalen Wertes des erfassten Phasenstroms den folgenden Schritt auf:
- Erstellen eines zeitlichen Verlaufs des erfassten Phasenstroms für zumindest einen Abschnitt der erfassten Zeitdauer.

Auf diese Weise kann das Maximum des Phasenstroms aus dem zeitlichen Verlauf des erfassten Phasenstroms ermittelt werden.

Eine Ausgestaltung vorliegende Erfindung betrifft auch eine Ansteuerungsschaltung eines Reluktanzmotors mit einem Zwischenkreis und mit einer Steuerungseinheit, welche ausgebildet ist, einen Stator des Reluktanzmotors zu steuern. Die Ansteuerungsschaltung ist dadurch gekennzeichnet, dass die Steuerungseinheit ferner ausgebildet ist, eine Zwischenkreisspannung des Zwischenkreises, vorzugsweise über wenigstens einen ersten Messwiderstand, besonders vorzugsweise über wenigstens einen weiteren zweiten Messwiderstand, zu erfassen und ein entsprechendes Verfahren wie zuvor beschrieben auszuführen.

Auf diese Weise kann eine Umsetzung des zuvor beschriebenen Verfahrens erfolgen, welches die Zwischenkreisspannung verwendet. Dabei kann es einfach möglich sein, die Zwischenkreisspannung über wenigstens einen Messwiderstand und vorzugsweise über zwei Messwiderstände zu erfassen.

Eine Ausgestaltung der vorliegende Erfindung betrifft auch eine Ansteuerungsschaltung eines Reluktanzmotors mit einer Steuerungseinheit, welche ausgebildet ist, einen Stator des Reluktanzmotors zu steuern. Die Ansteuerungsschaltung ist dadurch gekennzeichnet, dass die Steuerungseinheit ferner ausgebildet ist, einen Phasenstrom, vorzugsweise über wenigstens einen Messwiderstand, zu erfassen und ein entsprechendes Verfahren wie zuvor beschrieben auszuführen.

Auf diese Weise kann eine Umsetzung des zuvor beschriebenen Verfahrens erfolgen, welches den Phasenstrom verwendet. Dabei kann es einfach möglich sein, den Phasenstrom über einen Messwiderstand zu erfassen.

Vorteilhaft kann es hierbei sein, lediglich einen Messwiderstand zu verwenden, welcher abwechselnd von den Phasenströmen aller Phasen nacheinander durchflossen werden kann. Auf diese Weise können alle Phasenströme aller Phasen mit lediglich einem Messwiderstand erfasst werden.

Eine Ausgestaltung der vorliegende Erfindung betrifft ferner einen Reluktanzmotor mit einem Stator, einem Rotor und einer Ansteuerungsschaltung wie zuvor beschrieben zur Steuerung des Stators zur Bewegung des Rotors. Auf diese Weise können die beiden zuvor beschriebenen erfindungsgemäßen Verfahren einzeln oder gemeinsam bei einem Reluktanzmotor eingesetzt werden.

Eine Ausgestaltung der vorliegende Erfindung betrifft ferner ein elektrisches Gerät, insbesondere ein elektrisches Haushaltsgerät, insbesondere einen elektrischen Staubsauger für den Gebrauch im Haushalt, mit wenigstens einem Reluktanzmotor wie zuvor beschrieben zum Antreiben eines Bauteils des elektrischen Gerätes, insbesondere zum Antreiben eines Gebläses des elektrischen Staubsaugers. Auf diese Weise können die Vorteile der erfindungsgemäßen Verfahren einzeln oder gemeinsam bei einem elektrischen Gerät genutzt werden. Diese Verfahren einzeln oder gemeinsam zum Antreiben eines Gebläses eines elektrischen Staubsaugers umzusetzen kann den Vorteil der eingesparten Kosten, welche sich durch die Vermeidung eines Rotorlagegebers ergeben, insbesondere bei einer Kaufentscheidung eines Benutzers zur Geltung bringen.

Ein Ausführungsbeispiel der Erfindung ist in den Zeichnungen rein schematisch dargestellt und wird nachfolgend näher beschrieben. Es zeigt
- Figur 1: eine schematische Schnittdarstellung eines zweiphasigen Reluktanzmotors;
- Figur 2: ein schematisches Schaltbild einer Ansteuerungsschaltung des Reluktanzmotors der Figur 1;
- Figur 3: eine Darstellung der Verläufe der Zwischenkreisspannung und der beiden Phasenströme des Reluktanzmotors der Figur 1 bei idealen Startzeitpunkten und Endzeitpunkten des Bestromens der beiden Phasen;
- Figur 4: eine Detaildarstellung der Figur 3;
- Figur 5: eine schematische Darstellung der Induktivität einer Phase in Abhängigkeit der Drehstellung des Rotors des Reluktanzmotors;
- Figur 6: eine Darstellung der Verläufe der Zwischenkreisspannung und der beiden Phasenströme des Reluktanzmotors der Figur 1 bei verfrühten Startzeitpunkten des Bestromens der beiden Phasen;
- Figur 7: eine Darstellung der Verläufe der Zwischenkreisspannung und der beiden Phasenströme des Reluktanzmotors der Figur 1 bei verspäteten Endzeitpunkten des Bestromens der beiden Phasen,
- Figur 8: eine Darstellung des Verlaufs des Phasenstrom eines Reluktanzmotors bei verspätetem Endzeitpunkt des Bestromens, und
- Figur 9: ein schematisches Ablaufdiagramm zweier erfindungsgemäßer Verfahren zum Betrieb des Reluktanzmotors der Figur 1.

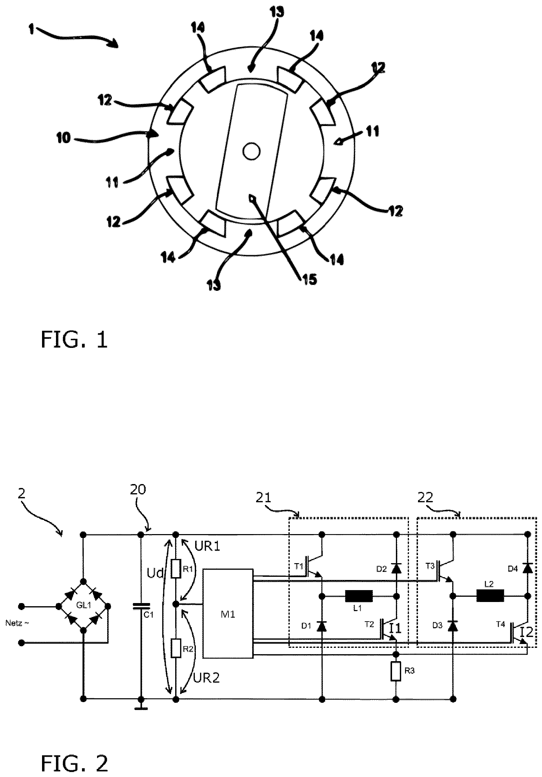

Figur 1 zeigt eine schematische Schnittdarstellung eines zweiphasigen Reluktanzmotors 1. Der Reluktanzmotor 1 weist einen feststehenden Stator 10 auf, in dessen Inneren ein Rotor 15 um eine Drehachse drehbar angeordnet ist. Der Rotor 15 besteht aus einem gestanzten Blechpaket eines ferromagnetischen Materials wie z.B. Eisen.

Der Stator 10 besteht aus einem ferromagnetischen Material wie z.B. Eisen und weist vier radial nach innen zum Rotor 15 hin zeigende Vorsprünge auf, welche die Pole 11, 13 des Stators 10 bilden. Die Pole 11, 13 sind jeweils mit elektrisch leitfähigem Draht z.B. aus Kupfer umwickelt, so dass sich die Wicklungen 12, 14 ausbilden. Dabei sind die Wicklungen 12 bzw. 14 der sich diametral gegenüber liegenden Pole 11 bzw. 13 jeweils in Reihe geschaltet und werden somit gleichzeitig vom selben Strom durchflossen. Die Wicklungen 12 der Pole 11 bilden den ersten Strang bzw. die erste Phase des Reluktanzmotors 1 und die Wicklungen 14 der Pole 13 den zweiten Strang des Reluktanzmotors 1. Die beiden Phasen sind somit orthogonal zueinander ausgerichtet. Sobald eine Phase angesteuert, d.h. bestromt wird, entsteht ein Magnetfeld, welches den Rotor 15 in die jeweilige Phasenposition zieht.

Figur 2 zeigt ein schematisches Schaltbild einer Ansteuerungsschaltung 2 des Reluktanzmotors 1 der Figur 1. Die Ansteuerungsschaltung 2 wird aus einem elektrischen Versorgungsnetz mit einer Wechselspannung als Netzspannung gespeist, welche durch einen Gleichrichter GL1 in eine Gleichspannung Ud umgewandelt wird. Die gleichgerichtete Spannung Ud liegt über einem Kondensator C1 an, welcher den Zwischenkreis 20 der Ansteuerungsschaltung 2 bildet. Die gleichgerichtete Spannung Ud kann daher auch als Zwischenkreisspannung Ud und der Kondensator C1 als Zwischenkreiskondensator C1 bezeichnet werden. Der Kondensator C1 ist relativ klein dimensioniert, so dass die Zwischenkreisspannung Ud sehr stark schwanken kann, jedoch die Kosten des Kondensators C1 vergleichsweise gering gehalten werden können. Dies kann als "weicher Zwischenkreis" 20 bezeichnet werden.

Aus dem Zwischenkreis 20 werden die beiden Phasen des Reluktanzmotors 1 mit der Zwischenkreisspannung Ud gespeist. Hierzu weist jede Phase des Reluktanzmotors 1 eine sog. H-Brücke 21, 22 auf. Die erste H-Brücke 21 der ersten Phase des Reluktanzmotors 1 weist einen ersten schaltbaren Leistungshalbleiter T1, einen zweiten schaltbaren Leistungshalbleiter T2, eine erste Diode D1 und eine zweite Diode D2 auf. Zwischen dem ersten schaltbaren Leistungshalbleiter T1 und der ersten Diode D1 auf der einen Seite und dem zweiten schaltbaren Leistungshalbleiter T2 und der zweiten Diode D2 auf der anderen Seite sind die Wicklungen 12 der ersten Phase angeordnet, welche in der Darstellung der Figur 2 durch eine Spule L1 repräsentiert werden. Die zweite H-Brücke 22 der zweiten Phase des Reluktanzmotors 1 weist einen dritten schaltbaren Leistungshalbleiter T3, einen vierten schaltbaren Leistungshalbleiter T4, eine dritte Diode D3 und eine vierte Diode D4 auf. Zwischen dem dritten schaltbaren Leistungshalbleiter T3 und der dritten Diode D3 auf der einen Seite und dem vierten schaltbaren Leistungshalbleiter T4 und der vierten Diode D4 auf der anderen Seite sind die Wicklungen 14 der zweiten Phase angeordnet, welche in der Darstellung der Figur 2 durch eine Spule L2 repräsentiert werden.

Die beiden H-Brücken 21, 22 können die jeweilige Phase über den ersten bzw. dritten schaltbaren Leistungshalbleiter T1, T3 sowie über die erste bzw. dritte Diode D1, D3 aus dem Zwischenkreis 20 heraus von der einen Seite und über den zweiten bzw. vierten schaltbaren Leistungshalbleiter T2, T4 sowie über die zweite bzw. vierte Diode D2, D4 aus dem Zwischenkreis 20 von der anderen Seite bestromen. Der Strom I1 der ersten Phase, welcher auch als erster Phasenstrom I1, bezeichnet werden kann, fließt z.B. über den zweiten schaltbaren Leistungshalbleiter T2. Entsprechendes gilt für den Strom I2 der zweiten Phase, welcher auch als zweiter Phasenstrom I2 bezeichnet werden kann, in Bezug auf den vierten schaltbaren Leistungshalbleiter T4.

Mittels der beiden H-Brücken 21, 22 kann der daran angeschlossene Reluktanzmotor 1 lediglich im Zweiquadrantenbetrieb dauerhaft betrieben werden, d.h. der Reluktanzmotor 1 kann dauerhaft nur motorisch und nicht generatorisch betrieben werden. Würde man die Dioden D1-D4 durch schaltbare Leistungshalbleiter ersetzen, so könnte der Reluktanzmotor 1 auch dauerhaft als Generator betrieben werden.

Die Ansteuerungsschaltung 2 weist ferner eine Steuerungseinheit M1 in Form eines Mikrocontrollers M1 auf, welcher die H-Brücken 21, 22 ansteuert und somit den Betrieb des Reluktanzmotors 1 durchführt.

Ein Ausführungsbeispiel der Erfindung weist die Ansteuerungsschaltung 2 einen ersten Messwiderstand R1 und einen zweiten Messwiderstand R2 auf, über welche die Spannungen UR1, UR2 abfallen, welche summiert der Zwischenkreisspannung Ud entsprechen. Ferner weist die Ansteuerungsschaltung 2 einen Messwiderstand R3 des Phasenstroms I1, I2 auf, welcher zwischen dem zweiten bzw. vierten schaltbaren Leistungshalbleiter T2, T4 und dem Zwischenkreis 20 angeordnet ist.

Auf diese Weise kann der Mikrocontroller M1 die Zwischenkreisspannung Ud erfassen. Ferner kann der Mikrocontroller M1 entweder den ersten oder den zweiten Phasenstrom I1, I2 erfassen, denn da die beiden Phasen nicht gleichzeitig bestromt werden, kann über den Messwiderstand R3 der jeweilige Phasenstrom I1, I2 erfasst werden.

Die Nutzung der drei Messwiderstände R1-R3 bzw. der hierdurch erfassten Zwischenkreisspannung Ud sowie der Phasenströme I1, I2 wird weiter unten näher erklärt werden.

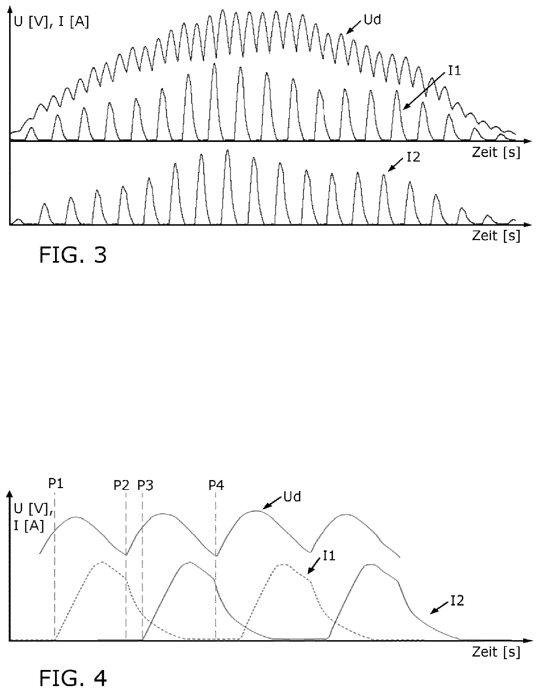

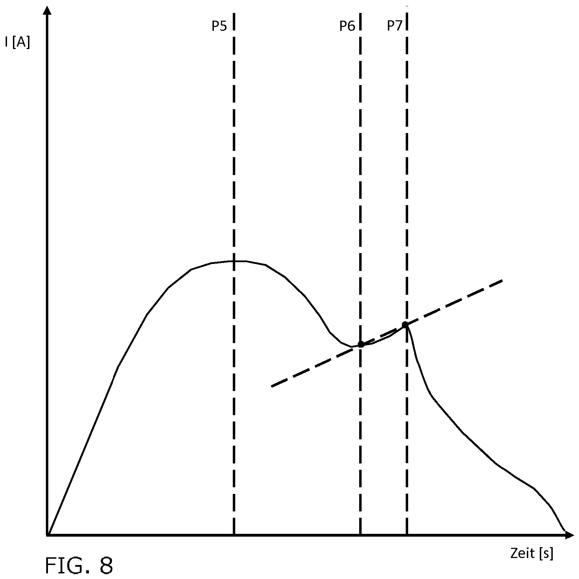

Figur 3 zeigt eine Darstellung der Verläufe der Zwischenkreisspannung Ud und der beiden Phasenströme I1, I2 des Reluktanzmotors 1 der Figur 1 bei idealen Startzeitpunkten und bei idealen Endzeitpunkten des Bestromens 100 der beiden Phasen, vgl. Figur 8. Figur 4 zeigt eine Detaildarstellung der Figur 3. Die Zwischenkreisspannung Ud geht dabei von nahezu Null auf ihr Maximum und fällt zum Ende des dargestellten Verlaufs wieder auf etwa Null ab. Die Phasenströme I1, I2 sind zueinander zeitversetzt, wobei der zeitliche Versatz einem Phasenwinkel von 90° entspricht. Ferner sind die Phasenströme I1, I2 aufgrund der Frequenz ihrer Ansteuerung direkt proportional zur Drehzahl des Reluktanzmotors 1. Die Frequenz der Zwischenkreisspannung Ud beträgt das Doppelte der Frequenz der Phasenströme I1, 12. Zu den Zeitpunkten, wenn die Netzspannung Netz ihren Nulldurchgang hat, sind die Zwischenkreisspannung Ud und die Phasenströme I1, I2 sehr klein.

Betrachtet man die Detaildarstellung der Figur 4 genauer, lassen sich zu einigen markanten Zeitpunkten P1-P4 der Figur 4 folgende Aussagen treffen:
Der Zeitpunkt P1 der Figur 4 stellt den Startzeitpunkt des Bestromens 100 der Wicklungen 12 der ersten Phase des Reluktanzmotors 1 dar. Die Zwischenkreisspannung Ud ist in diesem Moment ansteigend und weist eine vergleichsweise große Steigung auf, d.h. besitzt einen vergleichsweise großen Wert eines Anstiegs. Der erste Phasenstrom I1 steigt ab dem Zeitpunkt P1 der Figur 4 an, erreicht kurz nach der Hälfte der Zeitdauer zwischen den Zeitpunkten P1 und P2 der Figur 4 sein Maximum und klingt dann wieder ab. In dem Moment, wenn der Phasenstrom I1 sein Maximum erreicht, hat die Zwischenkreisspannung Ud ihr Maximum längst erreicht und klingt ihrerseits bereits ab.

Zum Zeitpunkt P2 der Figur 4 werden die schaltbaren Leistungshalbleiter T1, T2 der ersten H-Brücke 21 abgeschaltet. Hierdurch erfährt die Zwischenkreisspannung Ud in diesem Moment einen sehr plötzlichen Wendepunkt und steigt schlagartig wieder an. Dies liegt daran, dass die elektrische Energie, die in den bestromten Wicklungen 12 der ersten Phase des Reluktanzmotors 1 vorhanden war, nun über die beiden Dioden D1, D2 der ersten H-Brücke 21 in den Zwischenkreis 20 zurückgespeist wird. Der erste Phasenstrom I1 kommutiert auf die beiden Dioden D1, D2 der ersten H-Brücke 21 und baut sich wieder ab. Zum Zeitpunkt P3 der Figur 4 werden die Wicklungen 14 der zweiten Phase des Reluktanzmotors 1 bestromt. Zum Zeitpunkt P4 der Figur 4 endet das Bestromen 100 der Wicklungen 14 der zweiten Phase des Reluktanzmotors 1. Die Verläufe der Zwischenkreisspannung Ud und des zweiten Phasenstroms I2 entsprechen den vorherigen Beschreibungen der Zeitpunkte P1 und P2 der Figur. 4.

Um die Zeitpunkte P1 und P3 der Figur 4, zu denen das Bestromen 100 der jeweiligen Phase des Reluktanzmotors 1 idealerweise zu beginnen hat, sowie die Zeitpunkte P2 und P4 der Figur 4, zu denen das Bestromen 100 der jeweiligen Phase des Reluktanzmotors 1 idealerweise zu beenden ist, richtig zu wählen, ohne hierzu einen Rotorlagegeber zur Bestimmung der Rotorlage verwenden zu müssen, werden elektrische Größen des Reluktanzmotors 1 verwendet. Hierzu wird die Induktivität der Phase als Basis für die Rotorlageerkennung verwendet, welche sich durch die Drehstellung des Rotors 15 markant ändert.

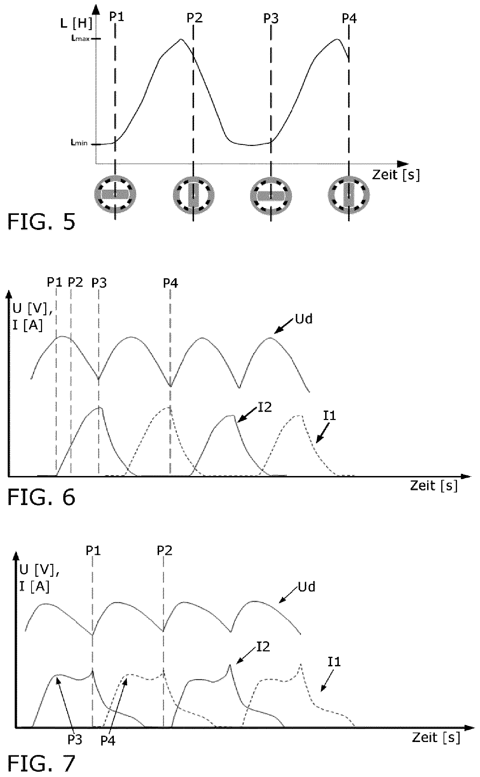

Figur 5 zeigt eine schematische Darstellung der Induktivität L einer Phase in Abhängigkeit der Drehstellung des Rotors 15 des Reluktanzmotors 1. Die Induktivität L der Phase variiert dabei zwischen einer minimalen Induktivität Lₘᵢₙ und einer maximalen Induktivität Lₘₐₓ. Die Zeitpunkte P1 und P3 der Figur 5 stellen die frühesten Startzeitpunkte des Bestromens 100 der betrachteten Phase dar. Die Zeitpunkte P2 und P4 der Figur 5 stellen die spätesten Endzeitpunkte des Bestromens 100 der betrachteten Phase dar.

Aus dem Stand der Technik ist ein Verfahren bekannt, bei dem der zeitliche Verlauf der Phasenströme I1, I2 abtastet wird, um das jeweilige Maximum zu erkennen, vgl. Figur 4. Wenn ein Phasenstrom I1, I2 maximal ist, so ist die Induktivität L dieser Phase minimal. Aus der Figur 5 lässt sich jedoch erkennen, dass die Erkennung der minimalen Induktivität Lₘᵢₙ keine präzise Winkelinformation bieten muss, weil das Minimum der Induktivität L sehr breit und flach ausgeprägt ist. Zudem ist das Maximum des Phasenstroms I1, I2 ebenfalls nicht sehr markant ausgeprägt sondern gleicht einem breiten flachen Hügel, vgl. Figur 4. Diese beiden Umstände stellen den entscheidenden Nachteil dieses bekannten Verfahrens dar.

Daher basiert die Erkennung der Rotorlage über andere elektrische Größen des Reluktanzmotors 1, wie im Folgenden näher erläutert:
Die Figuren 3 und 4 zeigen die Verläufe der Zwischenkreisspannung Ud und der beiden Phasenströme I1, I2 des Reluktanzmotors 1 bei idealen Startzeitpunkten und Endzeitpunkten des Bestromens 100 der beiden Phasen. Mit anderen Worten ist es das Ziel der Ansteuerung der beiden H-Brücken 21, 22 der Ansteuerungsschaltung 2, den Startzeitpunkt des Bestromens 100 sowie den Endzeitpunkt des Bestromens 100 der jeweiligen Phase derart vorzugeben, dass die Verläufe der Zwischenkreisspannung Ud und der beiden Phasenströme I1, I2 des Reluktanzmotors 1 gemäß der Figuren 3 und 4 erzeugt werden.

Betrachtet man vor diesem Hintergrund die Darstellung der Induktivität L der Figur 5, so ist die dort dargestellte Phase zwischen den Zeitpunkten P1 und P2 der Figur 5 sowie zwischen den Zeitpunkten P3 und P4 der Figur 5 bestromt. Hieraus resultieren die idealen Verläufe der Zwischenkreisspannung Ud und der beiden Phasenströme I1, I2 des Reluktanzmotors 1 gemäß der Figuren 3 und 4. Idealerweise wird eine Phase kurz nach dem Zeitpunkt P1 bzw. P3 der Figur 5 bestromt.

Wählt man nun den Startzeitpunkt des Bestromens 100 einer Phase zu früh, d.h. z.B. vor dem Zeitpunkt P1 der Figur 5, so kommt es zu Bremsmomenten am Rotor 15 bzw. es kann zum Kippen des Rotors 15 kommen. Wählt man den Endzeitpunkt des Bestromens 100 einer Phase zu spät, d.h. z.B. nach dem Zeitpunkt P2 der Figur 5, so hat dies die gleiche Wirkung. Figur 6 zeigt eine Darstellung der Verläufe der Zwischenkreisspannung Ud und der beiden Phasenströme I1, I2 des Reluktanzmotors 1 der Figur 1 bei verfrühten Startzeitpunkten des Bestromens 100 der beiden Phasen. Die Verläufe der Zwischenkreisspannung Ud und der beiden Phasenströme I1, I2 haben sich von den idealen Verläufen der Figuren 3 und 4 her dahingehend geändert, dass im Wesentlichen die beiden Phasenströme I1, I2 anders verlaufen.

Der Zeitpunkt P1 der Figur 6 stellt den Startzeitpunkt des Bestromens 100 der Wicklungen 14 der zweiten Phase dar, welcher vor dem Zeitpunkt P1 der Figur 5 liegt. Hierdurch kommt es zu einem verfrühten Bestromen 100 der Wicklungen 14 der zweiten Phase, was zu Bremsmomenten am Rotor 15 führt. Auf diese Weise ändern sich die Verläufe der Zwischenkreisspannung Ud und der beiden Phasenströme I1, I2 des Reluktanzmotors 1 wie in der Figur 6 dargestellt.

Hierbei steigt die Zwischenkreisspannung Ud in der Darstellung der Figur 6 nach dem Zeitpunkt P1 im Vergleich zur Darstellung der Figur 4 nach dem Zeitpunkt P1 kaum noch an. Genauer gesagt ist der Verlauf der Zwischenkreisspannung Ud in der Figur 6 bis zu einem Zeitpunkt P2 der Figur 6 erst sehr flach ansteigend und dann sehr flach abfallend. Hierdurch unterscheidet sich der Verlauf der Zwischenkreisspannung Ud der Figur 6 markant von dem entsprechenden Verlauf der Figur 4.

Zum Zeitpunkt P3 der Figur 6 wird das Bestromen 100 der Wicklungen 14 der zweiten Phase beendet. Dies gilt entsprechend für die erste Phase zum Zeitpunkt P4 der Figur 6.

Hieraus resultiert die Erkenntnis, dass falls die Zwischenkreisspannung Ud innerhalb einer vorbestimmten Zeitdauer nach dem Startzeitpunkt des Bestromens 100 der jeweiligen Phase in einem bestimmten Maße wie z.B. in dem Verlauf der Zwischenkreisspannung Ud der Figur 4 ansteigend ist, hieraus geschlossen werden kann, dass der Startzeitpunkt des Bestromens 100 der Phase richtig oder sogar ideal gewählt ist. Dann kann der Startzeitpunkt des Bestromens 100 der Phase für das nächste Bestromen 100 derselben Phase beibehalten werden.

Falls die Zwischenkreisspannung Ud jedoch innerhalb der vorbestimmten Zeitdauer nach dem Startzeitpunkt des Bestromens 100 der jeweiligen Phase nicht in einem bestimmten Maße wie z.B. in dem Verlauf der Zwischenkreisspannung Ud der Figur 6 ansteigend ist, kann hieraus geschlossen werden, dass der Startzeitpunkt des Bestromens 100 der Phase zu früh gewählt ist. Dann sollte der Startzeitpunkt des Bestromens 100 der Phase für das nächste Bestromen 100 derselben Phase zeitlich nach hinten verschoben werden. Dies gilt auch, falls die Zwischenkreisspannung Ud abfällt, d.h. eine negative Steigung aufweist.

Figur 7 zeigt eine Darstellung der Verläufe der Zwischenkreisspannung Ud und der beiden Phasenströme I1, I2 des Reluktanzmotors 1 der Figur 1 bei verspäteten Endzeitpunkten des Bestromens 100 der beiden Phasen. Auch in diesem Fall weichen im Wesentlichen die Verläufe der beiden Phasenströme I1, I2 von den idealen Verläufen der Figuren 3 und 4 ab.

Der Zeitpunkt P1 der Figur 7 stellt den Endzeitpunkt des Bestromens 100 der Wicklungen 14 der zweiten Phase dar, welcher nach dem Zeitpunkt P2 der Figur 5 liegt. Hierdurch kommt es zu einem zu langen Bestromen 100 der Wicklungen 14 der zweiten Phase, was ebenfalls zu Bremsmomenten am Rotor 15 führt. Auf diese Weise werden die Verläufe der Zwischenkreisspannung Ud und der beiden Phasenströme I1, I2 des Reluktanzmotors 1 wie in der Figur 7 dargestellt verändert.

Hierbei steigt der Phasenstrom I2 in der Darstellung der Figur 7 zum Zeitpunkt P1 im Vergleich zur Darstellung der Figur 4 zum Zeitpunkt P2 erneut an und bildet hierdurch einen ausgeprägten Zacken, der in der hier gewählten Darstellung sogar höher als das eigentliche Maximum des Phasenstroms I2 zum Zeitpunkt P3 der Figur 7 ist. Dies gilt für den ersten Phasenstrom I1 zu den Zeitpunkten P2 und P4 der Figur 7 entsprechend. Hierdurch unterscheiden sich die Verläufe der Phasenströme I1, I2 der Figur 7 markant von den entsprechenden Verläufen der Figur 4. Hieraus resultiert die weitere Erkenntnis, dass, falls der Gradient des Phasenstroms I1, I2 zum Endzeitpunkt des Bestromens 100 kleiner als ein vorbestimmter Schwellenwert ist, hieraus geschlossen werden kann, dass der Endzeitpunkt des Bestromens 100 der Phase richtig oder sogar ideal gewählt ist. Dann kann der Endzeitpunkt des Bestromens 100 der Phase für das nächste Bestromen 100 derselben Phase beibehalten werden. Der Schwellenwert kann bevorzugt Null sein.

Falls der Gradient des Phasenstroms I1, I2 zum Endzeitpunkt des Bestromens 100 jedoch gleich oder größer als der vorbestimmte Schwellenwert ist, d.h. sich ein mehr oder weniger hoher Zacken ausbildet, kann hieraus geschlossen werden, dass der Endzeitpunkt des Bestromens 100 der Phase zu spät gewählt ist. Dann sollte der Endzeitpunkt des Bestromens 100 der Phase für das nächste Bestromen 100 derselben Phase zeitlich nach vorne verschoben werden.

In der Figur 8 ist vergrößert ein Verlauf einer Überschreitung des optimalen Endzeitpunkts der Bestromung gezeigt, ähnlich der Situation wie in der Figur 7 gezeigt. Zum Zeitpunkt P5 weist der Phasenstrom I ein Maximum auf (analog zu P3 und P4 in Figur 7). Danach ist der Gradient di/dt bis zum Zeitpunkt P6 kleiner als Null, mit anderen Worten der Phasenstrom I fällt ab. In dem Bereich P6-P7 nimmt der Gradient di/dt jedoch Werte größer null an, d.h. der Phasenstrom I steigt wieder an, was anzeigt, dass der Zeitpunkt des Endes der Bestromung P7 zu spät liegt.

Dies kann erfasst werden, indem der Gradient di/dt nach dem Auftreten des Maximums bei P5 kontinuierlich erfasst wird, und bei Überschreitung eines vorgegeben Schwellenwertes - bevorzugt Null - der Endzeitpunkt des Bestromens vorverlegt wird. Alternativ ist ebenfalls möglich, den Verlauf des Phasenstrom I zu zwei Zeitpunkten (hier P6 und P7) zu bestimmen und die entsprechende Steigung mit dem Schwellenwert zu vergleichen. Dazu kann beispielsweise ein festes Zeitintervall vom Endzeitpunkt des Bestromens P7 zurück betrachtet werden, beispielsweise ein fester Bruchteil der Periodenlänge.

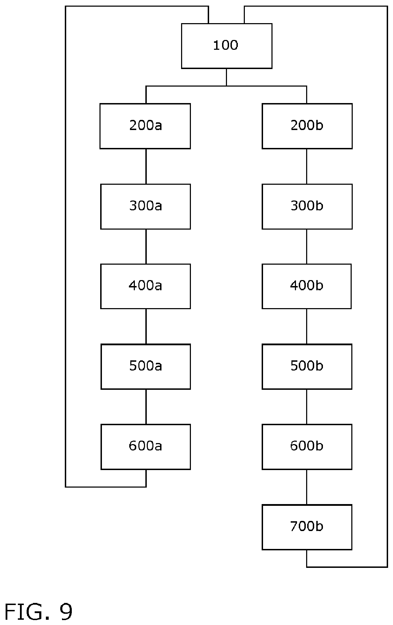

Diese vorstehenden Erkenntnisse können wie im Folgenden beschrieben und in der Figur 9 anhand eines schematischen Ablaufdiagramms dargestellt mittels zweier erfindungsgemäßer Verfahren zum Betrieb des Reluktanzmotors 1 der Figur 1 umgesetzt werden, wobei die beiden Verfahren auch miteinander kombiniert bzw. parallel eingesetzt werden können.

Zum einen kann die Erkenntnis, dass bei einem zu frühen Bestromen 100 einer Phase der Verlauf der Zwischenkreisspannung Ud gemäß der Figur 6 von dem idealen Verlauf der Zwischenkreisspannung Ud gemäß der Figur 4 abweicht, wie folgt in einem Verfahren umgesetzt werden:
In einem ersten Schritt 100 erfolgt ein Bestromen der Wicklung 12, 14 einer Phase des Reluktanzmotors 1 für eine vorbestimmte Zeitdauer ab einem Startzeitpunkt. Der Startzeitpunkt des Bestromens 100 ist sowohl in der Figur 4 als auch in der Figur 6 der Zeitpunkt P1. Die vorbestimmte Zeitdauer ab dem Startzeitpunkt endet in der Figur 4 zum Zeitpunkt P2 und in der Figur 6 zum Zeitpunkt P3.

In einem zweiten Schritt 200a erfolgt ein Erfassen der Zwischenkreisspannung Ud der Ansteuerungsschaltung 2 des Reluktanzmotors 1 für zumindest einen Abschnitt der vorbestimmten Zeitdauer, welche in der Figur 6 vom Zeitpunkt P1 bis zum Zeitpunkt P2 dauert und etwa der Hälfte der Zeitdauer vom Zeitpunkt P1 bis zum Zeitpunkt P3 der Figur 6 entspricht, d.h. etwa der Hälfte der Zeitdauer des Bestromens 100 entspricht.

In einem dritten Schritt 300a erfolgt ein Erstellen eines zeitlichen Verlaufs der erfassten Zwischenkreisspannung Ud für zumindest einen Abschnitt der erfassten Zeitdauer. Dieser Abschnitt der erfassten Zeitdauer kann kürzer als der Zeitraum zwischen den Zeitpunkten P1 und P2 der Figur 6 sein oder diesem Zeitraum entsprechen.

In einem vierten Schritte 400a erfolgt ein Ermitteln eines Wertes eines Anstiegs der erfassten Zwischenkreisspannung Ud aus dem erstellten zeitlichen Verlauf.

In einem fünften Schritt 500a erfolgt ein Vergleichen des Wertes des Anstiegs der erfassten Zwischenkreisspannung Ud mit einem vorbestimmten Wert eines Anstiegs. Der vorbestimmte Wert des Anstiegs ist dabei derart zu wählen, dass er dem idealen Verlauf der Zwischenkreisspannung Ud gemäß der Figur 4 zumindest im Wesentlichen entspricht.

In dem Fall, dass der ermittelte Wert des Anstiegs größer als oder gleich wie der vorbestimmte Wert eines Anstiegs ist, wird der Startzeitpunkt des Bestromens 100 für das nächste Bestromen 100 der Phase beibehalten. Ansonsten wird in dem Fall, dass der ermittelte Wert des Anstiegs kleiner als der vorbestimmte Wert eines Anstiegs ist, in einem sechsten Schritt 600a ein zeitliches Verzögern des Startzeitpunktes des Bestromens 100 für das nächste Bestromen 100 der Phase vorgenommen.

Zum anderen kann die Erkenntnis, dass bei einem verspäteten Beenden des Bestromens 100 einer Phase der Verlauf des entsprechenden Phasenstroms I1, I2 gemäß der Figur 7 oder Figur 8 von dem idealen Verlauf der Phasenströme I1, I2 gemäß der Figur 4 abweicht, wie folgt in einem Verfahren umgesetzt werden:
In einem ersten Schritt 100 erfolgt ein Bestromen der Wicklung 12, 14 einer Phase des Reluktanzmotors 1 für eine vorbestimmte Zeitdauer ab einem Startzeitpunkt, vgl. Figur 4.

In einem zweiten Schritt 200b erfolgt ein Erfassen des Phasenstroms I1, I2 der Ansteuerungsschaltung 2 des Reluktanzmotors 1 für zumindest einen Abschnitt der vorbestimmten Zeitdauer, welcher ausreichend lang gewählt ist, so dass der Zeitpunkt P3 der Figur 7 des Maximums des Phasenstroms I1, I2 sowie der Endzeitpunkt P1 der Figur 7 des Bestromens 100 der Phase umfasst werden.

In einem dritten Schritt 300b erfolgt ein Erstellen eines zeitlichen Verlaufs des erfassten Phasenstroms I1, I2 für zumindest einen Abschnitt der erfassten Zeitdauer, welcher seinerseits wenigstens den Zeitpunkt P3 der Figur 7 des Maximums des Phasenstroms I1, I2 sowie den Endzeitpunkt P1 der Figur 7 des Bestromens 100 der Phase umfasst. Dieser Abschnitt der erfassten Zeitdauer kann kürzer als der Zeitraum des zweiten Schrittes 200b sein oder diesem Zeitraum entsprechen.

In einem vierten Schritt 400b erfolgt ein Ermitteln eines Gradienten des erfassten Phasenstroms. Vorzugsweise erfolgt das Ermitteln aus dem im vorherigen dritten Schritt 300b erstellten zeitlichen Verlauf des erfassten Phasenstroms.

In einem fünften Schritt 500b erfolgt ein Ermitteln eines maximalen Wertes des ermittelten Gradienten des Phasenstroms. Alternativ kann hier auch eine Steigung des Phasenstroms an den Endpunkten eines Zeitintervalls betrachtet werden, das an den endzeitpunkt der vorbestimmten Zeitdauer angrenzt, also etwa einen Bruchteil der Periodenlänge vom Endzeitpunkt des Bestromens zurück.

In einem sechsten Schritt 600b erfolgt ein Vergleichen des maximalen Wertes des ermittelten Gradienten (oder alternativ des Werts der Steigung zwischen den zeit Endpunkten des Zeitintervalls) mit einem vorgegebenen Schwellenwert, der bevorzugt Null sein kann.

In dem Fall, dass der maximale Wert des Gradienten des Phasenstroms I1, I2 (bzw. die Steigung) kleiner als der vorgegebene Schwellenwert ist, also beispielsweise kleiner Null ist, wird der Endzeitpunkt des Bestromens 100 für das nächste Bestromen 100 der Phase beibehalten. Ansonsten wird in dem Fall, dass der maximale Wert des Gradienten des Phasenstroms I1, I2 gleich dem oder größer als der vorgegebene Schwellenwert ist, in einem siebten Schritt 700b ein zeitliches Vorziehen des Endzeitpunktes des Bestromens 100 für das nächste Bestromen 100 der Phase vorgenommen.

Dieses Verfahren wird in weiteren Zyklen gegebenenfalls wiederholt, bis der Gradient anzeigt, dass der Zeitpunkt des Beendens des Bestromens richtig gewählt ist.

Das zuvor beschriebene Ausführungsbeispiel betrifft einen zweiphasigen Reluktanzmotor 1. Das beschriebene Verfahren kann jedoch auf einen Reluktanzmotor 1 mit einer anderen Phasenzahl ohne weiteres übertragen werden.

### Bezugszeichenliste (Bestandteil der Beschreibung)

- C1: Kondensator des Zwischenkreises
- D1: erste Diode
- D2: zweite Diode
- D3: dritte Diode
- D4: vierte Diode
- GL1: Gleichrichter
- I: Strom
- I1: Strom der ersten Phase; erster Phasenstrom
- I2: Strom der zweiten Phase; zweiter Phasenstrom
- L: Induktivität
- Lₘᵢₙ: minimale Induktivität
- Lₘₐₓ: maximale Induktivität
- L1: Spule der Wicklungen des ersten Stranges bzw. der ersten Phase
- L2: Spule der Wicklungen des zweiten Stranges bzw. der zweiten Phase
- M1: Steuerungseinheit; Mikrocontroller
- Netz: Netzspannung
- P1: erster Zeitpunkt
- P2: zweiter Zeitpunkt
- P3: dritter Zeitpunkt
- P4: vierter Zeitpunkt
- P5: fünfter Zeitpunkt
- P6: sechster Zeitpunkt
- P7: siebter Zeitpunkt
- R1: erster Messwiderstand der Zwischenkreisspannung Ud
- R2: zweiter Messwiderstand der Zwischenkreisspannung Ud
- R3: Messwiderstand des Phasenstroms I1, I2
- T1: erster schaltbarer Leistungshalbleiter
- T2: zweiter schaltbarer Leistungshalbleiter
- T3: dritter schaltbarer Leistungshalbleiter
- T4: vierter schaltbarer Leistungshalbleiter
- U: Spannung
- Ud: Zwischenkreisspannung; Gleichspannung; gleichgerichtete Spannung
- UR1: Spannung über ersten Messwiderstand R1
- UR2: Spannung über zweiten Messwiderstand R2
- Zeit: Zeit
- 1: Reluktanzmotor
- 10: Stator
- 11: Pole des ersten Stranges bzw. der ersten Phase
- 12: Wicklungen des ersten Stranges bzw. der ersten Phase
- 13: Pole des zweiten Stranges bzw. der zweiten Phase
- 14: Wicklungen des zweiten Stranges bzw. der zweiten Phase
- 15: Rotor

- 2: Ansteuerungsschaltung
- 20: Zwischenkreis
- 21: erste H-Brücke des ersten Stranges bzw. der ersten Phase
- 22: zweite H-Brücke des zweiten Stranges bzw. der zweiten Phase

- 100: Bestromen der Wicklung 12, 14 einer Phase
- 200a: Erfassen einer Zwischenkreisspannung Ud
- 200b: Erfassen eines Phasenstroms I1, I2
- 300a: Erstellen eines zeitlichen Verlaufs der erfassten Zwischenkreisspannung Ud
- 300b: Erstellen eines zeitlichen Verlaufs des erfassten Phasenstroms I1, I2
- 400a: Ermitteln eines Wertes eines Anstiegs der erfassten Zwischenkreisspannung Ud
- 400b: Ermitteln eines maximalen Wertes des erfassten Phasenstroms I1, I2
- 500a: Vergleichen des Wertes des Anstiegs der erfassten Zwischenkreisspannung Ud mit einem vorbestimmten Wert eines Anstiegs
- 500b: Ermitteln eines Wertes des erfassten Phasenstroms I1, I2 zu einem Endzeitpunkt der vorbestimmten Zeitdauer
- 600a: zeitliches Verzögern des Startzeitpunktes des Bestromens 100 für das nächste Bestromen 100 der Phase
- 600b: Vergleichen des maximalen Wertes des erfassten Phasenstroms I1, I2 mit dem Wert des erfassten Phasenstroms I1, I2 zu dem Endzeitpunkt der vorbestimmten Zeitdauer
- 700b: zeitliches Vorziehen des Endzeitpunktes des Bestromens 100 für das nächste Bestromen 100 der Phase

## Patentansprüche

1. Verfahren zum Betrieb eines Reluktanzmotors (1), mit den Schritten:
Bestromen (100) der Wicklung (12; 14) einer Phase des Reluktanzmotors (1) für eine vorbestimmte Zeitdauer ab einem Startzeitpunkt,
Erfassen (200a) einer Zwischenkreisspannung (Ud) einer Ansteuerungsschaltung (2) des Reluktanzmotors (1) für zumindest einen Abschnitt der vorbestimmten Zeitdauer,
Erstellen (300a) eines zeitlichen Verlaufs der erfassten Zwischenkreisspannung (Ud) für zumindest einen Abschnitt der erfassten Zeitdauer,
Ermitteln (400a) eines Wertes eines Anstiegs der erfassten Zwischenkreisspannung (Ud) aus dem erstellten zeitlichen Verlauf,
Vergleichen (500a) des Wertes des Anstiegs der erfassten Zwischenkreisspannung (Ud) mit einem vorbestimmten Wert eines Anstiegs, und
in dem Fall, dass der ermittelte Wert des Anstiegs größer als oder gleich wie der vorbestimmte Wert eines Anstiegs ist, Beibehalten des Startzeitpunktes des Bestromens (100) für das nächste Bestromen (100) der Phase, und
in dem Fall, dass der ermittelte Wert des Anstiegs kleiner als der vorbestimmte Wert eines Anstiegs ist, zeitliches Verzögern (600a) des Startzeitpunktes des Bestromens (100) für das nächste Bestromen (100) der Phase.

2. Verfahren nach Anspruch 1, **dadurch gekennzeichnet, dass**
die Zwischenkreisspannung (Ud) ab dem Startzeitpunkt des Bestromens (100) erfasst wird.

3. Verfahren nach Anspruch 1 oder 2, **dadurch gekennzeichnet, dass**
die Zwischenkreisspannung (Ud) über etwa die halbe vorbestimmte Zeitdauer des Bestromens (100) erfasst wird.

4. Verfahren zum Betrieb eines Reluktanzmotors (1), mit den Schritten:
Bestromen (100) der Wicklung (12; 14) einer Phase des Reluktanzmotors (1) für eine vorbestimmte Zeitdauer ab einem Startzeitpunkt,
Erfassen (200b) eines Phasenstroms (I1; I2) einer Ansteuerungsschaltung (2) des Reluktanzmotors (1) für zumindest einen Abschnitt der vorbestimmten Zeitdauer, der den Endzeitpunkt der vorbestimmten Zeitdauer einschließt,
Erstellen (300b) eines zeitlichen Verlaufs des erfassten Phasenstroms (I1; I2) für zumindest den Abschnitt der vorbestimmten Zeitdauer,
Ermitteln (500b) eines Gradienten des erfassten Phasenstroms (I1; I2) in dem Abschnitt der vorbestimmten Zeitdauer, und
Vergleichen (600b) des ermittelten Gradienten mit einem vorgegebenen Schwellenwert, und
in dem Fall, dass der ermittelte Gradient kleiner als der vorgegebene Schwellenwert ist, Beibehalten des Endzeitpunktes des Bestromens (100) für das nächste Bestromen (100) der Phase, und
in dem Fall, dass der ermittelte Gradient gleich dem oder größer als der vorgegebene Schwellenwert ist, zeitliches Vorziehen (700b) des Endzeitpunktes des Bestromens (100) für das nächste Bestromen (100) der Phase.

5. Verfahren nach Anspruch 4, **dadurch gekennzeichnet, dass**
der Phasenstrom (I1; I2) ab dem Startzeitpunkt des Bestromens (100) erfasst wird und der Abschnitt der vorbestimmten Zeitdauer nach dem Auftreten eines ersten Maximums des Phasenstroms (I1; I2) beginnt.

6. Verfahren nach Anspruch 4 oder 5, **dadurch gekennzeichnet, dass**
der Abschnitt der vorbestimmten Zeitdauer maximal der halben vorbestimmten Zeitdauer des Bestromens (100) entspricht.

7. Verfahren nach einem der Ansprüche 4 bis 6,
wobei der vorgegebene Schwellenwert Null ist.

8. Ansteuerungsschaltung (2) eines Reluktanzmotors (1), mit
einem Zwischenkreis (20), und
einer Steuerungseinheit (M1), welche ausgebildet ist, einen Stator (10) des Reluktanzmotors (1) zu steuern,
wobei die Steuerungseinheit (M1) ferner ausgebildet ist, eine Zwischenkreisspannung (Ud) des Zwischenkreises (20), vorzugsweise über wenigstens einen ersten Messwiderstand (R1), besonders vorzugsweise über wenigstens einen weiteren zweiten Messwiderstand (R2), zu erfassen,
**dadurch gekennzeichnet, dass**
die Steuerungseinheit (M1) ferner ausgebildet ist,
ein Verfahren nach einem der Ansprüche 1 bis 3 auszuführen.

9. Ansteuerungsschaltung (2) eines Reluktanzmotors (1), mit einer Steuerungseinheit (M1), welche ausgebildet ist, einen Stator (10) des Reluktanzmotors (1) zu steuern,
wobei
die Steuerungseinheit (M1) ferner ausgebildet ist, einen Phasenstrom (I1; I2), vorzugsweise über wenigstens einen Messwiderstand (R3), zu erfassen,
**dadurch gekennzeichnet, dass**
die Steuereinheit (M1) ferner ausgebildet ist, ein Verfahren nach einem der Ansprüche 4 bis 7 auszuführen.

10. Reluktanzmotor (1), mit
einem Stator (10),
einem Rotor (15), und
einer Ansteuerungsschaltung (2) nach einem der Ansprüche 8 und/oder 9 zur Steuerung des Stators (10) zur Bewegung des Rotors (15).

11. Elektrisches Gerät, insbesondere elektrisches Haushaltsgerät, insbesondere elektrischer Staubsauger für den Gebrauch im Haushalt, mit
wenigstens einem Reluktanzmotor (1) nach Anspruch 10 zum Antreiben eines Bauteils des elektrischen Gerätes, insbesondere zum Antreiben eines Gebläses des elektrischen Staubsaugers.

## Claims

1. Method for operating a reluctance motor (1), comprising the following steps:
energising (100) the winding (12; 14) of a phase of the reluctance motor (1) for a predetermined period of time from a starting moment,
measuring (200a) an intermediate circuit voltage (Ud) of a drive circuit (2) of the reluctance motor (1) for at least a portion of the predetermined period of time,
creating (300a) a time profile of the measured intermediate circuit voltage (Ud) for at least a portion of the measured period of time,
determining (400a) a value of an increase in the measured intermediate circuit voltage (Ud) from the created time profile,
comparing (500a) the value of the increase in the measured intermediate circuit voltage (Ud) with a predetermined value of an increase, and
if the determined value of the increase is greater than or equal to the predetermined value of an increase, maintaining the starting moment of the energisation (100) for the next energisation (100) of the phase, and
if the determined value of the increase is smaller than the predetermined value of an increase, delaying (600a) the starting moment of the energisation (100) for the next energisation (100) of the phase.

2. Method according to claim 1, **characterised in that** the intermediate circuit voltage (Ud) is measured from the starting moment of the energisation (100).

3. Method according to either claim 1 or claim 2, **characterised in that** the intermediate circuit voltage (Ud) is measured over approximately half of the predetermined period of time of the energisation (100).

4. Method for operating a reluctance motor (1), comprising the following steps:
energising (100) the winding (12; 14) of a phase of the reluctance motor (1) for a predetermined period of time from a starting moment,
measuring (200b) a phase current (11; 12) of a drive circuit (2) of the reluctance motor (1) for at least a portion of the predetermined period of time, which includes the end moment of the predetermined period of time,
creating (300b) a time profile of the measured phase current (11; 12) for at least the portion of the predetermined period of time,
determining (500b) a gradient of the measured phase current (11; 12) in the portion of the predetermined period of time, and
comparing (600b) the determined gradient with a predetermined threshold, and
if the determined gradient is smaller than the predetermined threshold, maintaining the end moment of the energisation (100) for the next energisation (100) of the phase, and
if the determined gradient is equal to or greater than the predetermined threshold, bringing forward (700b) the end moment of the energisation (100) for the next energisation (100) of the phase.

5. Method according to claim 4, **characterised in that** the phase current (11; 12) is measured from the starting moment of the energisation (100) and the portion of the predetermined period of time begins after the occurrence of a first maximum of the phase current (11; 12).

6. Method according to either claim 4 or claim 5, **characterised in that** the portion of the predetermined period of time corresponds to a maximum of half of the predetermined period of time of the energisation (100).

7. Method according to any of claims 4 to 6, wherein the predetermined threshold is zero.

8. Drive circuit (2) of a reluctance motor (1), comprising an intermediate circuit (20) and a control unit (M1) which is designed to control a stator (10) of the reluctance motor (1), the control unit (M1) also being designed to measure an intermediate circuit voltage (Ud) of the intermediate circuit (20), preferably by means of at least one first measuring resistor (R1), particularly preferably by means of at least one further second measuring resistor (R2), **characterised in that** the control unit (M1) is also designed to carry out a method according to any of claims 1 to 3.

9. Drive circuit (2) of a reluctance motor (1), comprising a control unit (M1) which is designed to control a stator (10) of the reluctance motor (1), the control unit (M1) also being designed to measure a phase current (11; 12), preferably by means of at least one measuring resistor (R3), **characterised in that** the control unit (M1) is also designed to carry out a method according to any of claims 4 to 7.

10. Reluctance motor (1), comprising a stator (10), a rotor (15), and a drive circuit (2) according to claim 8 and/or claim 9 for controlling the stator (10) in order to move the rotor (15).

11. Electric appliance, in particular an electric domestic appliance, in particular an electric vacuum cleaner for use in the household, comprising at least one reluctance motor (1) according to claim 10 for driving a component of the electric appliance, in particular for driving a fan of the electric vacuum cleaner.

## Revendications

1. Procédé permettant de faire fonctionner un moteur à réluctance (1), comportant les étapes de :
alimentation (100) de la bobine (12 ; 14) d'une phase du moteur à réluctance (1) pendant une période de temps prédéterminée à partir d'un moment de démarrage,
détection (200a) d'une tension de circuit intermédiaire (Ud) d'un circuit de commande (2) du moteur à réluctance (1) pour au moins une partie de la période de temps prédéterminée,
création (300a) d'un profil temporel de la tension de circuit intermédiaire (Ud) détectée pendant au moins une partie de la période de temps détectée,
détermination (400a) d'une valeur d'une augmentation de la tension de circuit intermédiaire (Ud) détectée à partir du profil temporel créé,
comparaison (500a) de la valeur de l'augmentation de la tension de circuit intermédiaire (Ud) détectée avec une valeur prédéterminée d'une augmentation, et
dans le cas où la valeur déterminée de l'augmentation est supérieure ou égale à la valeur prédéterminée d'une augmentation, maintien du moment de démarrage de l'alimentation (100) pour la prochaine alimentation (100) de la phase, et
dans le cas où la valeur déterminée de l'augmentation est inférieure à la valeur prédéterminée d'une augmentation, temporisation (600a) du moment de démarrage de l'alimentation (100) pour la prochaine alimentation (100) de la phase.

2. Procédé selon la revendication 1, **caractérisé en ce que**
la tension de circuit intermédiaire (Ud) est détectée à partir du moment de démarrage de l'alimentation (100).

3. Procédé selon la revendication 1 ou 2, **caractérisé en ce que** la tension de circuit intermédiaire (Ud) est détectée sur environ la moitié de la période de temps prédéterminée de l'alimentation (100).

4. Procédé permettant de faire fonctionner un moteur à réluctance (1), comportant les étapes de :
alimentation (100) de la bobine (12 ; 14) d'une phase du moteur à réluctance (1) pendant une période de temps prédéterminée à partir d'un moment de démarrage, détection (200b) d'un courant de phase (I1 ; I2) d'un circuit de commande (2) du moteur à réluctance (1) pendant au moins une partie de la période de temps prédéterminée, qui comprend le moment de fin de la période de temps prédéterminée,
création (300b) d'un profil temporel du courant de phase (I1 ; I2) détecté pour au moins la partie de la période de temps prédéterminée,
détermination (500b) d'un gradient du courant de phase (I1 ; I2) détecté dans la partie de la période de temps prédéterminée, et
comparaison (600b) du gradient déterminé avec une valeur de seuil prédéterminée, et
dans le cas où le gradient déterminé est inférieur à la valeur de seuil prédéterminée, maintien du moment de fin de l'alimentation (100) pour la prochaine alimentation (100) de la phase, et
dans le cas où le gradient déterminé est égal ou supérieur à la valeur seuil prédéfinie, avancée temporelle (700b) du moment de fin de l'alimentation (100) pour la prochaine alimentation (100) de la phase.

5. Procédé selon la revendication 4, **caractérisé en ce que**
le courant de phase (I1 ; I2) est détecté à partir du moment de démarrage de l'alimentation (100) et la partie de la période de temps prédéterminée commence après l'apparition d'un premier maximum du courant de phase (I1 ; I2).

6. Procédé selon la revendication 4 ou 5, **caractérisé en ce que**
la partie de la période de temps prédéterminée correspond au maximum à la moitié de la période de temps prédéterminée de l'alimentation (100).

7. Procédé selon l'une des revendications 4 à 6,
dans lequel la valeur de seuil prédéterminée est zéro.

8. Circuit de commande (2) d'un moteur à réluctance (1), comportant
un circuit intermédiaire (20), et
une unité de commande (M1) qui est conçue pour commander un stator (10) du moteur à réluctance (1),
l'unité de commande (M1) étant également conçue pour détecter une tension de circuit intermédiaire (Ud) du circuit intermédiaire (20), de préférence par l'intermédiaire d'au moins une première résistance de mesure (R1), de manière particulièrement préférée par l'intermédiaire d'au moins une autre seconde résistance de mesure (R2), **caractérisé en ce que**
l'unité de commande (M1) est également conçue pour mettre en œuvre un procédé selon l'une des revendications 1 à 3.

9. Circuit de commande (2) d'un moteur à réluctance (1), comportant
une unité de commande (M1) qui est conçue pour commander un stator (10) du moteur à réluctance (1),
l'unité de commande (M1) étant en outre conçue pour détecter un courant de phase (I1 ; I2), de préférence par l'intermédiaire d'au moins une résistance de mesure (R3), **caractérisé en ce que**
l'unité de commande (M1) est en outre conçue pour mettre en œuvre un procédé selon l'une des revendications 4 à 7.

10. Moteur à réluctance (1), comportant
un stator (10),
un rotor (15) et
un circuit de commande (2) selon l'une des revendications 8 et/ou 9, lesquels permettent de commander le stator (10) pour déplacer le rotor (15).

11. Appareil électrique, en particulier appareil électroménager, en particulier aspirateur électrique à usage domestique, comportant
au moins un moteur à réluctance (1) selon la revendication 10 permettant d'entraîner un composant de l'appareil électrique, en particulier permettant d'entraîner un ventilateur de l'aspirateur électrique.
